# EUROPÄISCHE PATENTANMELDUNG

(11) **EP 3 147 441 A1**
(43) Veröffentlichungstag der Anmeldung: **29.03.2017**
(21) Anmeldenummer: 16174128.5
(22) Anmeldetag: 13.06.2016
(51) Int. Cl.: E05F 15/622, B60J 5/10, F16H 25/20, F16H 25/24, E05F 1/10, E05F 3/00

(54) **ELEKTROMECHANISCHE STÜTZE MIT ELEKTROMECHANISCHER BREMSE UND VERFAHREN ZUM ERLAUBEN UND VERHINDERN EINER BEWEGUNG EINES VERSCHLUSSELEMENTES EINES FAHRZEUGS**

(30) Priorität: 24.04.2015 US 201562152256 P
(71) Anmelder: Magna Closures Inc., Newmarket, Ontario L34 4X7 (CA)
(72) Erfinder: Jube, Leonard, Barrie, Ontario L4M 4Y8 (CA); Shchokin, Borys M., Thornhill, Ontario L4J 5L5 (CA); Scheuring, Joseph, Richmond Hill, Ontario L4E 4M7 (CA)
(74) Vertreter: Glawe, Delfs, Moll

(57) **Zusammenfassung**

Eine elektromechanische Stütze (10) und ein Verfahren zur Bewegung eines Verschlusselementes eines Fahrzeugs zwischen einer geöffneten Position und einer geschlossenen Position werden geschaffen. Die elektromechanische Stütze umfasst eine Antriebseinheit (12) mit einem Motor (32), einer Leitspindel (36), einem Planeten-Getriebesatz (34), der funktionsfähig den Motor mit der Leitspindel verbindet, und einer elektromechanischen Bremsanordnung (38). Die elektromechanische Stütze umfasst ferner eine Teleskopeinheit (16) mit einem ausfahrbaren Rohr (18) und einer Antriebsmutter (62) zur Wandlung einer Drehbewegung der Leitspindel in eine lineare Bewegung der Teleskopeinheit. Die elektromechanische Bremsanordnung ist selektiv zwischen einem Eingriffszustand bewegbar, in dem die Leitspindel an einer Drehung gehindert ist, um eine axiale Relativbewegung zwischen der Antriebseinheit und der Teleskopeinheit zu verhindern, und einem Nicht-Eingriffszustand, in dem der Leitspindel eine Drehung ermöglicht ist, um eine axiale Relativbewegung zwischen der Antriebseinheit und der Teleskopeinheit zu ermöglichen.

## Beschreibung

### QUERBEZUG ZU VERWANDTEN ANMELDUNGEN

Diese Anmeldung beansprucht den Vorteil der provisorischen US-Anmeldung Seriennummer 62/152 256, die am 24. April 2015 eingereicht wurde, die in ihrer Gesamtheit hier durch Bezugnahme eingebracht wird.

### FELD DER ERFINDUNG

Die vorliegende Offenbarung bezieht sich allgemein auf eine elektromechanische Stütze zum Öffnen und Schließen eines Fahrzeug-Verschlusselementes und insbesondere auf eine elektromechanische Stütze mit einem Motor, der funktionsfähig gekoppelt ist, um eine Leitspindel anzutreiben, und mit einer elektromechanischen Bremse, die es erleichtert, die Leitspindel in einer lösbar fixierten Position zu halten.

### HINTERGRUND DER ERFINDUNG

Dieser Abschnitt liefert Hintergrundinformation, die zu den erfinderischen Konzepten, die mit der vorliegenden Offenbarung verbunden sind, nicht notwendigerweise Stand der Technik ist. Fahrzeug-Verschlusselemente, beispielsweise Hubtüren und Seitentüren, schaffen einen bequemen Zugriff zu den Innenbereichen eines Fahrzeugs, beispielsweise zu den Ladebereichen von Schrägheckfahrzeugen, Lieferwagen und anderen Nutzfahrzeugen. Typischerweise wird eine Hubtür oder eine Seitentür per Hand betätigt, was manuellen Aufwand erfordert, um die Hubtür oder die Tür zwischen der geöffneten und der verschlossenen Position zu bewegen. Abhängig von der Größe und dem Gewicht der Hubtür oder derTür kann dieser Aufwand für einige Benutzer schwierig sein. Des Weiteren kann das manuelle Öffnen oder Schließen einer Hubtür oder Seitentür unbequem sein, insbesondere wenn der Benutzer die Hände voll hat.

Versuche wurden unternommen, um den Aufwand und die Unbequemlichkeit des Öffnens und des Schließens einer Hubtür oder Seitentür zu vermindern. Eine Lösung für eine Hubtür ist eine schwenkbare Montage von Gasstützen, die auch als Spindeln bezeichnet werden, an sowohl dem Fahrzeugkörper als auch an der Hubtür, was die Kraft, die zum Öffnen der Tür erforderlich ist, reduziert. Diese Gasstützen behindern jedoch den Aufwand zum Verschließen der Tür, da die Stützen beim Schließen wieder unter Druck gesetzt werden, was den erforderlichen Aufwand erhöht. Zusätzlich variiert die Wirksamkeit der Gasstützen entsprechend der Umgebungstemperatur. Des Weiteren erfordert die Verwendung von Gasstützen, dass die Hubtür noch manuell geöffnet und geschlossen wird.

Automatisierte angetriebene Verschlusssysteme, die zum Öffnen und Schließen von Fahrzeug-Hubtüren verwendet werden, sind in der Technik allgemein bekannt und umfassen typischerweise ein angetriebenes Betätigungsglied, das betreibbar ist, um eine Kraft direkt an die Hubtür anzulegen, um so ihr Öffnen und Schließen zu ermöglichen. Beispielsweise beschreibt das US-Patent 6 516 567 ein angetriebenes Betätigungsglied, das zusammen mit einer Gasstütze arbeitet. Das angetriebene Betätigungsglied umfasst einen Motor, der innerhalb des Fahrzeugkörpers montiert ist, der über eine Kupplung mit einem flexiblen Drehkabel verbunden ist. Das flexible Drehkabel treibt eine ausfahrbare Stütze, die schwenkbar an sowohl dem Fahrzeugkörper als auch an der Hubtür montiert ist. Somit kann der Motor die Hubtür ohne manuellen Aufwand anheben und absenken. Eine Steuereinheit, die zum Eingriff und Lösen des Motors betreibbar ist, kann mit einer Taste einer Fernbedienung oder mit einem Knopf in der Fahrgastzelle verbunden sein, wodurch zusätzliche Bequemlichkeit geschaffen wird. Diese Art von angetriebenem Betätigungsglied ist jedoch nicht ohne ihre Nachteile. Insbesondere umfasst das angetriebene Betätigungsglied mehrere Teile, von denen jedes zusammengesetzt und separat an dem Fahrzeug montiert werden muss, was die Kosten erhöht. Der Fahrzeugkörper muss besonders ausgestaltet sein, um einen Raum zur Aufnahme des Motors zu schaffen. Aufgrund des begrenzten zur Verfügung stehenden Raums ist der Motor klein und erfordert die Unterstützung der Gasstütze. Da des Weiteren das angetriebene Betätigungsglied ausgebildet ist, um zusammen mit einer Gasstütze zu arbeiten, kann die Gasstütze noch in ihrer Wirksamkeit aufgrund der Temperatur variieren. Somit muss der vorgesehene Motor ausgeglichen sein, um den korrekten Anteil von Antrieb mit variierenden Graden der mechanischen Unterstützung von der Gasstütze zu liefern.

Die US-Veröffentlichung Nummer US 2004/0084265 liefert verschiedene Beispiele von angetriebenen Betätigungsgliedern, die zusammen mit Gasstützen arbeiten, und verschiedene alternative Beispiele von elektromechanischen angetriebenen Betätigungsgliedern. Diese elektromechanischen angetriebenen Betätigungsglieder umfassen einen Elektromotor und einen Reduktions-Getriebesatz, der über ein flexibles Drehkabel mit einem zweiten Getriebesatz gekoppelt ist, der seinerseits über eine Rutschkupplung mit einem drehbaren Kolbenstab verbunden ist. Eine Drehung des Kolbenstabs veranlasst einen Spindel-Antriebsmechanismus, eine ausfahrbare Stütze zu bewegen, die ausgebildet ist, um schwenkbar an einem, dem Fahrzeugkörper und der Hubtür, montiert zu sein. Die Rutschkupplung funktioniert, um zu ermöglichen, dass der Kolbenstab relativ zu dem Getriebesatz dreht, wenn ein Drehmoment, das seine Vorlast überschreitet, an die Hubtür angelegt wird, um eine manuelle Betätigung der Hubtür aufzunehmen, ohne das elektromechanisch angetriebene Betätigungsglied zu beschädigen. Insbesondere koppelt die Rutschkupplung den Getriebesatz lösbar mit dem Kolbenstab, wodurch bei normalem Betrieb das angetriebene Öffnen und Schließen der Hubtür geschaffen wird. Wenn jedoch eine große Kraft an die ausfahrbare Stütze angelegt wird, die versucht, den Spindel-Antriebsmechanismus in Abhängigkeit von einer übermäßigen oder missbräuchlichen manuellen Betätigung der Hubtür zurück zu treiben, löst die Rutschkupplung zeitweilig die Antriebsverbindung zwischen dem Kolbenstab und dem Getriebesatz, um eine mechanische Beschädigung des Systems zu verhindern. Eine wendelförmige Kompressionsfeder ist in dem angetriebenen Betätigungsglied installiert, um eine ausgleichende Gegenkraft gegen das Gewicht der Hubtür zu schaffen, die ihrerseits die Größe und das Gewicht der Anordnung erhöht.

Die US-Veröffentlichungsnummer US 2012/0000304 beschreibt verschiedene Ausführungsbeispiele von angetriebenen Betriebsmechanismen zur Bewegung von Kofferraumdeckeln und Hubtüren zwischen der geöffneten und der geschlossenen Position. Die angetriebenen Betriebsmechanismen haben eine versetzte Anordnung mit einem durch Elektromotor angetriebenen Schneckengetriebe, um eine mit Außengewinde versehene Bundschraube zu drehen, um eine ausfahrbare Stütze zu bewegen. Eine Rutschkupplung ist zwischen einem Ausgabegetriebe des Schneckengetriebes und der drehbaren Bundschraube angeordnet. Des Weiteren ist eine Kupplungseinheit zwischen der Motoren-Ausgabewelle und der Schnecke des Schneckengetriebes vorgesehen. Die Kupplungseinheit umfasst ein erstes Kupplungselement, das für eine Drehung mit der Schneckenwelle fixiert ist, ein zweites Kupplungselement, das für eine Drehung mit der Motor-Ausgabewelle befestigt ist, und ein elastisches Band, das zwischen Finger eingefügt ist, die sich von dem ersten und dem zweiten Kupplungselement erstrecken. Die elastische Kupplung schafft eine axiale und umfängliche Isolation zwischen dem ersten und dem zweiten Kupplungselement und funktioniert, um kurzzeitige oder drehende Stoßbelastungen zwischen der Motorwelle und der Schneckenwelle zu absorbieren.

Während derzeitig bekannte elektromechanische Antriebsmechanismen für ihre beabsichtigten Zwecke zufriedenstellend arbeiten, sind verbesserte Vorrichtungen zum Öffnen und Schließen von Fahrzeug-Verschlusselementen wie Hubtüren und Seitentüren erwünscht.

### ZUSAMMENFASSUNG DER ERFINDUNG

Dieser Abschnitt liefert eine allgemeine Zusammenfassung der Offenbarung und ist keine vollständige Offenbarung ihres vollständigen Umfangs oder all ihrer Merkmale, Aspekte und Aufgaben.

Es ist ein Aspekt der vorliegenden Offenbarung eine verbesserte elektromechanische Stütze zur Verwendung in einem angetriebenen Verschlusssystem eines Kraftfahrzeugs zum Steuern der Bewegung und des Bremsens eines Verschlusselementes zwischen einer geöffneten Position und einer geschlossenen Position zu schaffen.

Es ist ein verbundener Aspekt der vorliegenden Offenbarung, eine verbesserte elektromechanische Stütze zur Verwendung in einer Steuerbewegung und Bremsung eines angetriebenen Hubtür-Systems oder Seitentürsystems eines Kraftfahrzeugs zu schaffen.

Es ist ein weiterer Aspekt der vorliegenden Offenbarung, eine solche elektromechanische Stütze einschließlich eines Motors zu schaffen, der in Verbindung mit einem Getriebekasten und einer Leitspindel betreibbar ist, um den Getriebekasten und die Leitspindel anzutreiben, wobei die Stütze ferner eine elektromechanische Bremse aufweist, um selektiv zu verhindern, dass die Leitspindel angetrieben wird, um die Leitspindel in einer lösbar fixierten Position zu halten.

Die elektromechanische Bremse der Stütze umfasst eine erste Reibungsplatte, die funktionsfähig mit einer Welle des Motors für eine gemeinsame Drehung damit gekoppelt ist, eine zweite Reibungsplatte, ein Federelement und eine elektrische Spule. Die Bremse hat eine normale "Ein-Position", in der die Wendelfeder die zweite Reibungsplatte in Kontakt mit der ersten Reibungsplatte vorspannt, so dass die zweite Reibungsplatte die erste Reibungsplatte und die Motorwelle an einer Drehung hindert, was seinerseits eine Bewegung des Getriebekastens und der Leitspindel verhindert. Durch Halten der Leitspindel in einer fixierten Position verhindert dementsprechend die elektromechanische Bremse, während sie in der "Ein-Position" ist, eine Bewegung des zugeordneten Fahrzeug-Verschlusselements. Zur Bewegung der Leitspindel von einer fixierten Position eine neue Position, beispielsweise um zumindest teilweise die Hubtür oder die Seitentür zu öffnen oder zu schließen, wird die elektrische Spule gespeist, um ein Magnetfeld zu erzeugen. Die Magnetkraft zieht die zweite Reibungsplatte außer Kontakt mit der ersten Reibungsplatte. Der Motor wird auch gespeist, so dass die erste Reibungsplatte und die Motorwelle drehen, um den Getriebekasten und somit die Leitspindel in die neue Position zu bringen.

Weitere Aspekte der vorliegenden Offenbarung umfassen ein Verfahren der Herstellung der elektromechanischen Stütze und ein Verfahren der Öffnung, des Schließens und des Haltens des Fahrzeug-Verschlusselementes in einer fixierten Position unter Verwendung der elektromechanischen Stütze.

In Übereinstimmung mit einem Aspekt der Erfindung umfasst eine elektromechanische Stütze zur Bewegung eines Verschlusselementes eines Fahrzeugs zwischen einer offenen Position und einer geschlossenen Position eine angetriebene Antriebseinheit, die funktionsfähig mit einem, dem Verschlusselement und dem Kraftfahrzeugkörper, verbunden ist. Die angetriebene Antriebseinheit umfasst ein Gehäuse mit einer Innenfläche, die einen Hohlraum begrenzt, der sich entlang einer Mittelachse zwischen gegenüberliegenden ersten und zweiten Enden erstreckt. Ein Motor ist in dem Hohlraum fixiert, eine Leitspindel ist in dem Hohlraum angeordnet, ein Planeten-Getriebesatz verbindet eine Motorwelle des Motors mit der Leitspindel, und eine elektromechanische Bremsanordnung ist funktionsfähig mit der Motorwelle verbunden. Die elektromagnetische Stütze umfasst ferner eine Teleskopeinheit, die funktionsfähig mit dem anderen, dem Verschlusselement und dem Kraftfahrzeugkörper, verbunden ist. Die Teleskopeinheit umfasst ein ausfahrbares Rohr, das zumindest teilweise in dem Hohlraum des Gehäuses aufgenommen ist, und umfasst ferner eine Antriebsmutter zur Wandlung einer Drehbewegung der Leitspindel in eine lineare Bewegung der Teleskopeinheit, um die Teleskopeinheit zwischen einer eingezogenen Position relativ zu dem Gehäuse und einer ausgefahrenen Position relativ zu dem Gehäuse zu bewegen. Die elektromagnetische Bremsanordnung ist selektiv zwischen einem Eingriffszustand und einem Nicht-Eingriffszustand bewegbar. Die Motorwelle und die Leitspindel werden an einer Drehung gehindert, wenn die elektromagnetische Bremsanordnung in dem Eingriffszustand ist, um eine relative Axialbewegung zwischen der Antriebseinheit und der Teleskopeinheit zu verhindern. Die Motorwelle und die Leitspindel können drehen, wenn die elektromechanische Bremsanordnung in dem Nicht-Eingriffszustand ist, um eine relative Axialbewegung zwischen der angetriebenen Antriebseinheit und der Teleskopeinheit zu erlauben.

In Übereinstimmung mit einem weiteren Aspekt der Erfindung hat die elektromechanische Bremsanordnung eine Spulenanordnung, die funktionsfähig mit einer Quelle elektrischen Stroms verbunden ist. Die elektromechanische Bremsanordnung verbleibt in dem Eingriffszustand, wenn die Spulenanordnung aufgrund von Abwesenheit des elektrischen Stroms abgeschaltet wird, und wird selektiv in den Nicht-Eingriffszustand bewegt, wenn die Spulenanordnung selektiv durch elektrischen Strom gespeist wird.

In Übereinstimmung mit einem weiteren Aspekt der Erfindung umfasst die elektromechanische Bremsanordnung eine erste Reibungsplatte und eine zweite Reibungsplatte. Die erste und die zweite Reibungsplatte werden in Reibungseingriff miteinander vorgespannt, wenn die Spulenanordnung abgeschaltet ist, und die erste und die zweite Reibungsplatte werden aus dem Reibungseingriff miteinander durch eine Magnetkraft bewegt, die von der Spulenanordnung abgegeben wird, wenn die Spulenanordnung selektiv gespeist wird.

In Übereinstimmung mit einem weiteren Aspekt der Erfindung umfasst die elektromechanische Bremsanordnung ein Federelement, das die ersten und zweiten Reibungsplatten in Reibungseingriff miteinander vorgespannt, wenn die Spulenanordnung abgeschaltet ist, wodurch die Kraft der Feder überwunden wird, um zu ermöglichen, dass sich die ersten und zweiten Reibungsplatten aus dem Reibungseingriff miteinander bewegen, wenn die Spulenanordnung gespeist wird.

In Übereinstimmung mit einem weiteren Aspekt der Findung ist das ausfahrbare Rohr der Teleskopeinheit ein Rohr mit einer einzelnen Wand und umfasst kein Ausgleichsfederelement.

In Übereinstimmung mit einem weiteren Aspekt der Erfindung wird ein Verfahren geschaffen zum Erlauben und Verhindern einer Bewegung eines Verschlusselementes eines Fahrzeugs zwischen einer offenen Position und einer geschlossenen Position mit einer elektromechanischen Stütze. Die elektromechanische Stütze hat eine angetriebene Antriebseinheit, die funktionsfähig mit einem, dem Verschlusselement und dem Kraftfahrzeugkörper, verbunden ist, wobei die angetriebene Antriebseinheit einen Motor aufweist, eine Leitspindel, einen Planetengetriebesatz, der funktionsfähig eine Motorwelle des Motors mit der Leitspindel verbindet, eine elektromechanische Bremsanordnung, die funktionsfähig mit der Motorwelle verbunden ist, und eine Teleskopeinheit, die funktionsfähig mit dem anderen, dem Verschlusselement und dem Kraftfahrzeugkörper, verbunden ist, wobei die Teleskopeinheit ein ausfahrbares Rohr und eine Antriebsmutter aufweist zur Wandlung einer Drehbewegung der Leitspindel in eine lineare Bewegung der Teleskopeinheit, um die Teleskopeinheit zwischen einer eingezogenen Position und einer ausgefahrenen Position zu bewegen. Das Verfahren umfasst das selektive Anweisen der elektromechanischen Bremsanordnung zur Bewegung in einen Eingriffszustand, um die Motorwelle und die Leitspindel an einer Drehung zu hindern und eine relative Axialbewegung zwischen der angetriebenen Antriebseinheit und der Teleskopeinheit zu verhindern, und das selektive Anweisen der elektromechanischen Bremsanordnung zur Bewegung in einen Nicht-Eingriffszustand, um der Motorwelle und der Leitspindel eine Drehung zu erlauben und eine relative Axialbewegung zwischen der angetriebenen Antriebseinheit und der Teleskopeinheit zu erlauben.

In Übereinstimmung mit einem weiteren Aspekt der Erfindung umfasst das Verfahren ferner das Abschalten einer Spulenanordnung der elektromechanischen Bremsanordnung, um die elektromechanische Bremsanordnung in dem Eingriffszustand zu halten, und das Speisen der Spulenanordnung der elektromechanischen Bremsanordnung mit elektrischem Strom, um die elektromechanische Bremsanordnung in den Nicht-Eingriffszustand zu bewegen.

In Übereinstimmung mit einem weiteren Aspekt der Erfindung umfasst das Verfahren ferner das Vorspannen einer ersten und einer zweiten Reibungsplatte der elektromechanischen Bremsanordnung in Reibungseingriff miteinander, wenn die Spulenanordnung abgeschaltet ist, und die Bewegung der ersten und der zweiten Reibungsplatte aus dem Reibungseingriff miteinander durch eine Magnetkraft, die von der Spulenanordnung abgegeben wird, wenn die Spulenanordnung gespeist wird.

In Übereinstimmung mit einem weiteren Aspekt der Erfindung umfasst das Verfahren ferner das Vorspannen der ersten und der zweiten Reibungsplatte der elektromechanischen Bremsanordnung in Reibungseingriff miteinander mit einem Federelement, wenn die Spulenanordnung abgeschaltet ist.

In Übereinstimmung mit einem weiteren Aspekt der Erfindung umfasst das Verfahren ferner das Bewegen der zweiten Reibungsplatte axial weg von der ersten Reibungsplatte unter dem Einfluss der Magnetkraft beim selektiven Speisen der Spulenanordnung über eine Anweisung von einer elektronischen Steuereinheit.

In Übereinstimmung mit einem weiteren Aspekt der Erfindung kann das Verfahren ferner das Vorsehen des ausfahrbaren Rohres der Teleskopeinheit als ein einzelnes Rohr ohne ein Ausgleichsfederelement umfassen.

Diese und andere alternative Ausführungsbeispiele sind auf die Schaffung einer elektromechanischen Stütze mit erhöhtem Betrieb gerichtet, einschließlich zusätzlicher Haltekraft, in einer kompakten Anordnung zur Verwendung in einem angetriebenen Verschlusssystem eines Kraftfahrzeugs.

Weitere Anwendungsfelder werden aus der hier gelieferten Beschreibung ersichtlich. Die Beschreibung und die speziellen Beispiele in dieser Zusammenfassung sind nur für die Zwecke der Erläuterung beabsichtigt, und es ist nicht beabsichtigt, den Umfang der vorliegenden Offenbarung zu beschränken.

### KURZBESCHREIBUNG DER ZEICHNUNGEN

Die Erfindung wird nun nur beispielsweise mit Bezug auf die beigefügten Figuren beschrieben, wobei:
Figur 1 eine perspektivische Darstellung eines Kraftfahrzeugs mit einem Verschlusssystem ist, das beispielsweise als angetriebene Hubtür dargestellt ist, die zumindest mit einer, und wie dargestellt, mit einem Paar von elektromechanischen Stützen ausgestattet ist, von denen mindestens eine in Übereinstimmung mit den Lehren der vorliegenden Offenbarung aufgebaut ist,
Figur 2A eine Seitenansicht der elektromechanischen Stütze der Figur 1 ist, die in Übereinstimmung mit einem Aspekt der Erfindung aufgebaut ist,
Figur 2B eine Seitenansicht der elektromechanischen Stütze ist, die gemäß einem anderen Aspekt der Erfindung aufgebaut ist,
Figur 2C eine Seitenansicht der elektromechanischen Stütze der Figuren 2A und 2B ist, wobei davon ein äußeres Gehäuse entfernt ist,
Figur 2D eine Querschnittsansicht ist, die allgemein entlang einer Längsmittelachse der elektromechanischen Stütze der Figur 2A ist,
Figur 3 eine perspektivische Explosionsansicht eines Motors und einer Bremsanordnung der elektromechanischen Stütze der Figuren 2A und 2B ist,
Figur 4A eine vergrößerte Querschnittsseitenansicht der Bremsanordnung der elektromechanischen Stütze der Figuren 2A und 2B ist, die in einer Eingriffsposition dargestellt ist, und
Figur 4B eine vergrößerte Querschnittsseitenansicht der Bremsanordnung der elektromechanischen Stütze der Figuren 2A und 2B ist, die in einer Nicht-Eingriffsposition dargestellt ist.

### DETAILLIERTE BESCHREIBUNG DER ERFINDUNG

Fahrzeuge, insbesondere Personenfahrzeuge sind mit bewegbaren Verschlussplatten zur Schaffung von Öffnungen, Durchlässen und Zugriff innerhalb und durch definierte Teile des Fahrzeugkörpers versehen. Um die Bequemlichkeit eines Benutzers zu erhöhen, sind heutzutage viele Fahrzeuge mit angetriebenen Verschlusssystemen versehen, um automatisch die Bewegung aller Arten von Verschlussklappen einschließlich, ohne Beschränkung, Fließhecktüren, Seitentüren, Kofferraum- und Haubendeckel, Schiebe- und Schwenktüren, Sonnendächer und dergleichen zu steuern. Zu Zwecken der Klarheit der Beschreibung erfolgt die Beschreibung der Offenbarung hier im Kontext einer angetriebenen Hubtür oder Seitentür. Beim Lesen der folgenden detaillierte Beschreibung in Verbindung mit den beigefügten Zeichnungen wird jedoch klar, dass die erfinderischen Konzepte der vorliegenden Offenbarung bei unzähligen anderen Systemen und Anwendungen eingesetzt werden können und die hier beschriebenen und dargestellten speziellen Ausführungsbeispiele beispielhaft und nicht beschränkend beabsichtigt sind.

In diesem Zusammenhang ist die vorliegende Offenbarung auf elektromechanische Stützen mit einem angetriebenen Antriebsmechanismus gerichtet, der ein Gehäuse, einen Elektromotor, einen Reduktionsgetriebesatz, der durch den Elektromotor betrieben wird, eine drehbare Leistungsschraube, eine Kupplungsvorrichtung, die funktionsfähig zwischen dem Getriebesatz und der Leistungsschraube angeordnet ist, ein ausfahrbares Element, das linear relativ zu dem Gehäuse bewegbar ist, aufweist.

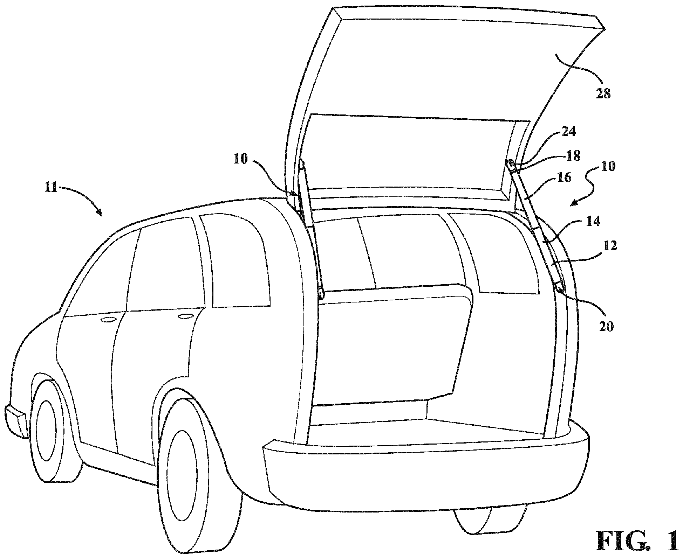

Nunmehr bezugnehmend auf die Figur 1 ist ein Ausführungsbeispiel einer elektromechanischen Stütze 10 dargestellt, die an einem Kraftfahrzeug 11 montiert ist. Die elektromechanische Stütze 10 umfasst eine angetriebene Antriebseinheit 12, die in einem äußeren Gehäuse oder Rohr aufgenommen ist, das im Folgenden einfach als Gehäuse 14 bezeichnet wird, ein ausfahrbare Element, das auch als Teleskopeinheit 16 bezeichnet wird, das in einem unteren Gehäuse oder Rohr aufgenommen ist, das im Folgenden einfach als ausfahrbares Rohr 18 bezeichnet wird. Eine erste Schwenkhalterung 20 wie ein 10 mm-Kugelzapfen, als Beispiel und ohne Beschränkung, der an einem ersten Ende 22 der Stütze 10 fixiert ist, ist schwenkbar an einem Teil des Fahrzeugkörpers angrenzend an einen inneren Ladebereich des Fahrzeugs 11 montiert. Eine zweite Schwenkhalterung 24 wie ein 10 mm-Kugelzapfen, als Beispiel und ohne Beschränkung, der an einem zweiten Ende 26 der Stütze 10 befestigt ist, ist schwenkbar an einer Hubtür 28 des Fahrzeugs 11 montiert, als Beispiel und ohne Beschränkung.

Die elektromechanische Stütze 10 schafft eine verbesserte Betätigung in einer kompakten Anordnung mit reduziertem Gewicht durch eine minimale Anzahl von Komponenten und mit einem reduzierten Außendurchmesser oder Querschnittsfläche. Die Stütze 10 umfasst eine Motorgetriebe-Anordnung 30, die einen Motor 32, einen Getriebekasten, auch als Planeten-Getriebesatz 34 bezeichnet, und eine Leistungsschraube aufweist, die auch als Leitspindel 36 bezeichnet wird. Die Möglichkeit, die elektromechanische Stütze 10 in einer kompakten Anordnung mit reduziertem Gewicht zu schaffen, wird zumindest teilweise durch eine integrale elektromechanische Bremsanordnung geschaffen, die im Folgenden einfach als Bremse 38 bezeichnet wird. Wenn die Bremse 38 in ihrer normalen geschlossenen Position ist, die auch als "Ein-Position" oder "Eingriffszustand" bezeichnet wird, liefert sie eine zusätzliche Haltekraft, um die angetriebene Antriebsvorrichtung 12 und die Teleskopeinheit 16 in axial fixierten oder im wesentlichen fixierten Positionen relativ zueinander zu halten. Wenn demgegenüber die Bremse 38 selektiv in eine geöffnete Position bewegt wird, auch als "Aus-Position" oder "Nicht-Eingriffszustand" bezeichnet, ist die Teleskopeinheit 16 in der Lage, sich relativ zu der angetriebenen Antriebseinheit 12 in eine neue Axialposition zu bewegen, um so die Hubtür 24 oder Seitentür des Fahrzeugs 11 zu öffnen oder zu schließen, beispielsweise und ohne Beschränkung.

Im allgemeinen kann die elektromechanische Stütze 10 oder die Bremse 38 der Stütze 10 der vorliegenden Offenbarung anstatt von oder zusammen mit jeweils den elektromechanischen Stützen verwendet werden, die offenbart sind in der provisorischen US-Patentanmeldung 62/083419, die am 24. November 2014 eingereicht wurde, der provisorischen US-Patentanmeldung 62/109157, die am 29. Januar 2015 eingereicht wurde, der provisorischen US-Patentanmeldung 62/204 154, die am 12. August 2015 eingereicht wurde, der US-Patentanmeldung 14/750 042, die am 15. Juni 2015 eingereicht wurde, und der US-Patentanmeldung 14/938 156, die am 11. November 2015 eingereicht wurde, die alle hier durch Bezugnahme in ihrer Gesamtheit eingebracht werden. Diese Patentanmeldung machen klar, wie verschiedene Komponenten der elektromechanischen Stütze 10 der vorliegenden Offenbarung relativ zueinander funktionieren und wie die Stütze 10 der vorliegenden Offenbarung in eine Fahrzeuganwendung eingebracht werden kann.

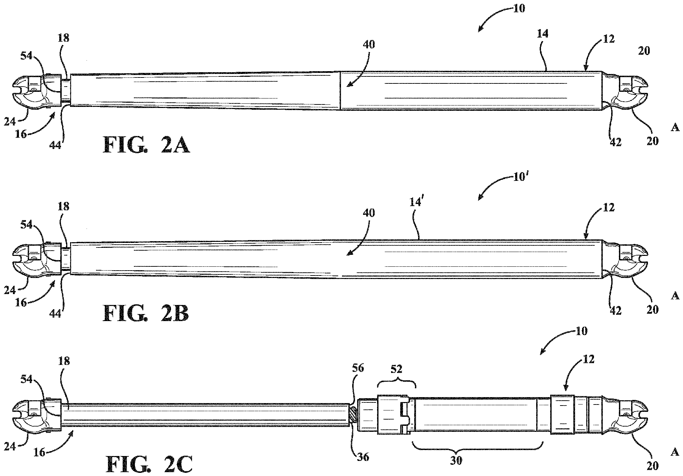

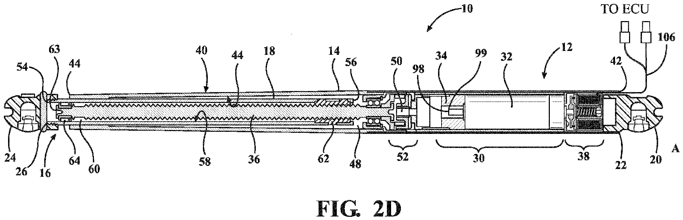

Die in den Figuren 2A-2D dargestellte elektromechanische Stütze 10 umfasst mehrere Merkmale und ihre Weglassung, was zu dem verbesserten Betrieb, reduziertem Gewicht und kompakter Auslegung der Stütze 10 beiträgt. Zusätzlich zu der Einbringung der elektromechanischen Bremse 38, die eine zusätzliche erwünschte Haltekraft zur selektiven Verhinderung einer Relativbewegung zwischen der angetriebenen Antriebseinheit 12 und der Teleskopeinheit 16 schafft, vermeidet die beispielhafte Stütze 10 den Bedarf für ein Ausgleichsfederelement wie eine Schraubenfeder, die typischerweise innerhalb oder an einer Teleskopeinheit der Stützen eingesetzt wird, die im Hintergrund diskutiert wurden. Die Elimination der Ausgleichsfeder schafft die Fähigkeit, die elektromagnetische Stütze 10 mit einem reduzierten Durchmesser und/oder Querschnittsfläche auszulegen, was es erlaubt, das Gewicht der Stütze 10 zu reduzieren, als Ergebnis der minimierten Baugröße der Stütze 10 und der Weglassung des Materials der Ausgleichsfeder, und die Außenhülle ist reduziert, was zu einer kompakten Ausgestaltung führt.

Wie in den Figuren 2A und 2B dargestellt ist, hat das äußere Gehäuse 14 eine rohrförmige Wand mit einer Außenfläche 40, sich entlang einer Längsachse A zwischen den gegenüberliegenden ersten und zweiten Enden 42, 44 erstreckt, und eine Innenfläche 46, die einen Hohlraum oder eine Kammer 48 begrenzt, die für zumindest eine teilweise Aufnahme der Motor-GetriebeAnordnung 30 darin bemessen ist. Der Motor 32 und der Planeten-Getriebesatz 34 sind innerhalb der Kammer 48 gelagert. Die Leitspindel 36 ist innerhalb der Teleskopeinheit 16 angeordnet und an eine Ausgabe-Drehwelle 50 der angetriebenen Antriebseinheit 12 gekoppelt. In dem dargestellten Ausführungsbeispiel schafft der Planeten-Getriebesatz 34, der an sich in der Technik bekannt ist, eine Getriebeverhältnis-Reduktion um etwa 20:1, beispielsweise und ohne Beschränkung. Der Getriebesatz 34 kann so, wie es in jedem der oben genannten Dokumente, die hier durch Bezugnahme eingebracht werden, beschrieben ist, und kann mit jeder gewünschten Getriebeverhältnis-Reduktion verwendet werden. Die angetriebene Antriebseinheit 12 hat das Merkmal einer Kupplung 52, die es der Leistungseinheit 12 ermöglicht, schnell und einfach mit der Teleskopeinheit 16 verbunden zu werden. In dem ersten Ausführungsbeispiel umfasst die rohrförmige Wand des äußeren Gehäuses 14 ein Paar von zylinderförmigen Rohren, die miteinander verbunden sind, obwohl zu berücksichtigen ist, dass, wie in Figur 2B dargestellt ist, bei einer elektromechanischen Stütze 10', die in Übereinstimmung mit einem anderen Aspekt der Erfindung aufgebaut ist, eine rohrförmige Wand des Gehäuses 14' als ein einzelnes rohrfömiges Element vorgesehen sein kann, falls gewünscht, was alles das gleiche oder im Wesentlichen das gleiche ist. Der Motor 32 und der Getriebesatz 34 sind entlang der Achse A zwischen der Leitspindel 36 und der elektromechanischen Bremsanordnung 38 so angeordnet, dass die Bremsanordnung 38 zwischen dem Motor 32 und dem ersten Ende 42 des Gehäuses 14 angeordnet ist, und der Motor 32 ist zwischen dem Getriebesatz 34 und der elektromechanischen Bremsanordnung 38 angeordnet. Alternativ könnte, falls gewünscht, die elektromechanische Bremsanordnung 38 an der gegenüberliegenden Seite des Motors 22 und des Getriebekastens 24 angeordnet sein, wie ein Fachmann bei Betrachtung der hiesigen Offenbarung erkennt.

Die Teleskopeinheit 16 umfasst das einwandige ausfahrbare Rohr 18, das sich entlang der Längsachse A zwischen den gegenüberliegenden ersten und zweiten Enden 54, 56 erstreckt und eine Innenfläche 58 aufweist, die einen Hohlraum oder eine Kammer 60 begrenzt, die zur Aufnahme der Leitspindel 36 mit Spiel bemessen ist. Ein Ende 54 des ausfahrbaren Rohrs 18 ist starr mit der zweiten Schwenkhalterung 24 verbunden, beispielsweise über zusammenpassende wendelförmige Gewinde zur Verbindung der Teile, beispielsweise und ohne Beschränkung.

Das ausfahrbare Rohr 18 hat eine Antriebsmutter 62, die fest in seiner Kammer 60 angrenzend an sein zweites Ende 56 montiert ist, beispielsweise über Presspassung und/oder Klebebefestigung darin oder Nietverbindung, beispielsweise und ohne Beschränkung. Die Antriebsmutter 62 ist gewindemäßig mit der Leitspindel 36 gekoppelt, um die Drehbewegung der Leitspindel 36 in eine lineare Bewegung der Teleskopeinheit 16 entlang der Längs-Mittelachse A der Stütze 10 umzusetzen. Zur Vereinfachung der Führung der Teleskopeinheit 16 in einer allgemein konzentrischen Beziehung zu dem Gehäuse 14 entlang der Achse A, kann eine ringförmige Verschleißhülse 64 mit geringer Reibung angrenzend an das Ende 63 der Leitspindel 36 mit jedem geeigneten Befestigungsmechanismus fixiert sein. Die Verschleißhülse 64 verbleibt axial fixiert in Bezug auf die Leitspindel 36 und erleichtert die Führung einer glatten Axialbewegung des ausfahrbaren Rohres 18, wenn es sich axial in Abhängigkeit von der Axialbewegung der Antriebsmutter 62 entlang des Außengewindes der Leitspindel 36 bewegt.

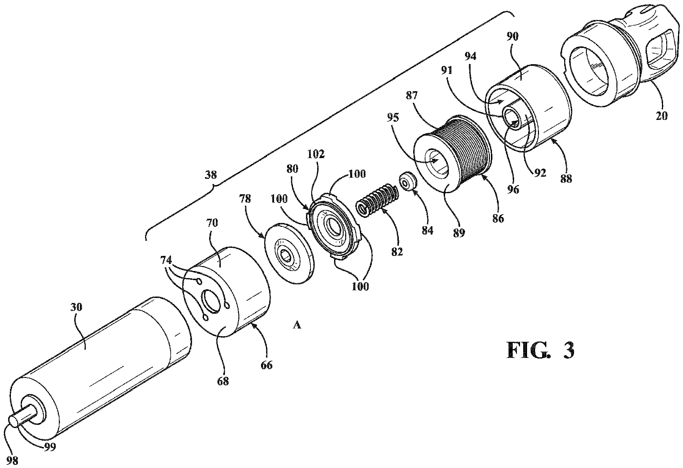

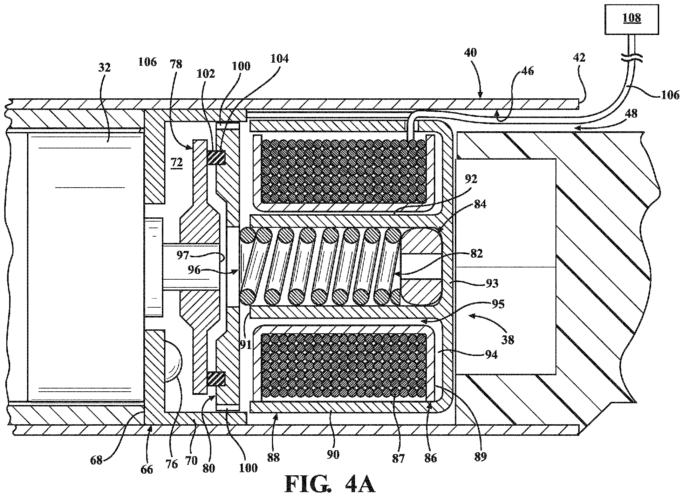

Wie am besten in der Explosionsdarstellung der Figur 3 dargestellt ist, umfasst die elektromechanische Bremsanordnung 38 ein Bremsgehäuse 66 mit einer Endmontagefläche 68 und einer ringförmigen Außenwand 70,die, wie dargestellt, im allgemeinen zylindrisch ist und einen inneren Hohlraum 72 begrenzt, der für die wesentliche Aufnahme verschiedener Komponenten der Bremsanordnung 38 bemessen ist. Zur Vereinfachung der Befestigung der Bremsanordnung 38 in Position ist die Endmontagefläche 68 mit einer Anzahl von Durchgangsöffnungen 74 zur Aufnahme von Befestigungsmitteln dadurch dargestellt, wobei die Befestigungsmittel als Befestigungsmittel 76 mit Gewinden zur gewindemäßigen Aufnahme in einem Ende des Motors 32 (Figuren 4 A-4B) vorgesehen sein können, beispielsweise und ohne Beschränkung. Die Bremsanordnung 38 umfasst ferner eine erste Reibungsplatte 78, die auch als eine drehende Bremsscheibe bezeichnet wird, und eine zweite Reibungsplatte 80, die auch als eine nicht drehende oder gleitende Bremsscheibe bezeichnet wird, ein Federelement, das beispielsweise und ohne Beschränkung als eine Schraubenfeder 82 dargestellt ist, einen Abstandshalter 84, der auch als Distanzscheibe bezeichnet wird, eine elektromagnetische Spulenanordnung 86, wie beispielsweise und ohne Beschränkung eine Spulenanordnung mit einem leitfähigen elektrischen Draht 87, der wendelförmig um einen Spulenkörper 89 gewickelt ist und in betriebsfähiger elektrischer Verbindung mit einer Quelle elektrischen Stroms ausgebildet ist, und ein Spulengehäuse 88.

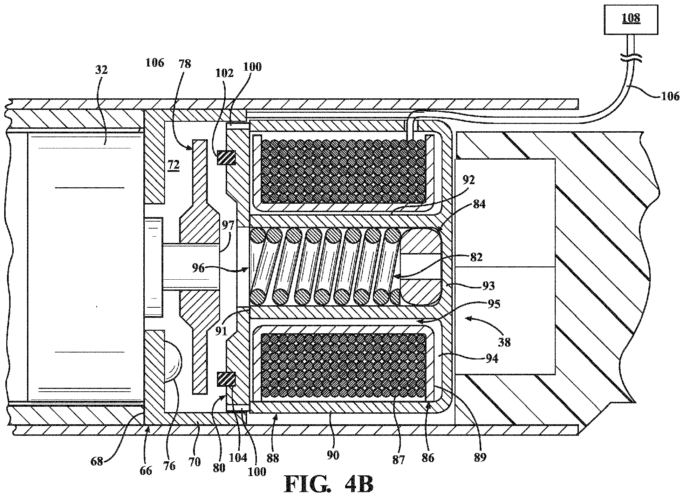

Das Spulengehäuse hat eine ringförmige Außenwand 90 und einen mittigen rohrförmigen Zapfen 92, der sich entlang der Achse A von einer Endwand 93 zu einem freien Ende erstreckt, mit einem ringförmigen Hohlraum 94, der sich zwischen der Wand 90 und dem Zapfen 92 zur Aufnahme der Spulenanordnung 86 darin erstreckt. Der Spulenkörper 89 der Spulenanordnung 86 hat eine Durchgangsöffnung oder einen Durchlass 95, der für die enge Aufnahme einer Außenfläche des Zapfens 92 bemessen ist, und ist für eine enge Aufnahme innerhalb des Hohlraums 94 des Spulengehäuses 88 bemessen. Wie am besten in den Figuren 4A und B dargestellt ist, ist der Abstandshalter 84 in einem Hohlraum oder einer Tasche 96 angeordnet, der durch die Wand des rohrförmigen Zapfens 92 begrenzt wird, so dass der Abstandshalter 84 in Anschlag mit der Endwand 93 gebracht wird. Das Federelement 82 ist in der Tasche 96 gegen den Abstandshalter 84 angeordnet, wobei das Federelement 82 eine Länge hat, die ausreichend ist, um sich axial entlang der Achse A nach außen von und über ein freies Ende 91 des rohrförmigen Zapfens 92 zu erstrecken, während es in einem ungespannten, axial dekomprimierten Zustand ist. Es sollte berücksichtigt werden, dass der Abstandshalter 84 mit der gewünschten axialen Dicke vorgesehen sein kann, um die Kraft des Federelements 82, die an die zweite Reibungsplatte 80 angelegt wird, durch Einstellung, wie weit das Federelement 82 sich axial über das freie Ende 91 des Zapfens 92 erstreckt, einzustellen, zusätzlich zu der Einstellung der Federkonstante des Federelements 82. Mit dem Bremsgehäuse 66 an dem Motor 32 und/oder dem Planeten-Getriebesatz 34 befestigt, ist die erste Reibungsplatte 78 betriebsfähig für eine feste Anbringung an einem Ende verbunden, das als ein Eingangs- oder erstes Ende 97 einer Motorwelle 98 des Motors 32 dargestellt ist, für eine gemeinsame Drehung damit, beispielsweise über eine Presspassung, verklebt und/oder über mechanische Befestigungsmittel damit befestigt, beispielsweise und ohne Beschränkung, während ein gegenüberliegendes Ende, das als ein Ausgangs- oder zweites Ende 99 der Motorwelle 98 dargestellt ist, betriebsfähig fest mit dem Planeten-Getriebesatz 34 verbunden ist, um seine Zahnräder betriebsfähig anzutreiben. Die zweite Reibungsplatte 80 ist in dem Bremsgehäuse 66 zwischen der ersten Reibungsplatte 78 und dem Federelement 82 angeordnet, so dass das Federelement 82 an der zweiten Reibungsplatte 80 angreift und zwangsweise die zweite Reibungsplatte 80 in Kontakt mit der ersten Reibungsplatte bei Vervollständigung der Anordnung vorspannt und während sie in der "Ein-Position" oder im "Eingriffszustand" ist. Die zweite Reibungsplatte 80 ist nicht für eine Drehbewegung um die Achse A vorgesehen, sondern vielmehr für eine Gleitbewegung entlang der Achse A während der Bewegung zwischen den "Eingriffs"- und "Nicht-Eingriffs"-Zuständen. Zur Vereinfachung einer glatten Gleitbewegung ist die zweite Reibungsplatte 80 mit einer Anzahl von sich radial nach außen erstreckenden Laschen oder Ohren 100 für einen engen Gleiteingriff mit der Innenfläche der Bremsgehäuse-Außenwand 70 dargestellt. Zur Vereinfachung der Herstellung eines hohen Reibungseingriffs zwischen der ersten und der zweite Reibungsplatte 78, 80 in dem "Eingriffszustand", hat die dargestellte zweite Reibungsplatte 80 ein Material mit hohem Reibungskoeffizienten, das in Form eines ringförmigen Bands 102 ausgebildet ist, das innerhalb einer ringförmigen Nut 104 in einer Endfläche der zweiten Reibungsplatte 80 fixiert ist. Dementsprechend erstreckt sich das ringförmige Band 102 von der Endfläche der zweiten Reibungsplatte 80 für den Reibungseingriff mit einer Endfläche der ersten Reibungsplatte 78 in dem "Eingriffszustand" nach außen. Es soll festgestellt werden, dass das Band 102 wie gewünscht an der ersten Reibungsplatte 78 oder beiden, der ersten und der zweiten Reibungsplatte 78, 80, befestigt sein kann, um einen gewünschten Grad des Reibungseingriffs zwischen ihnen zu erzielen. Es soll ferner festgestellt werden, dass jedes geeignete Material mit hohem Reibungskoeffizienten für das Band 102 verwendet werden kann, und ferner, dass Endflächen der ersten Reibungsplatte 78 und/oder der zweiten Reibungsplatte 80 oberflächenbehandelt oder wie gewünscht in anderer Weise aufgeraut sein können, um die Schaffung eines hohen Grades der Reibung zwischen ihnen zu erleichtern, um die erste Reibungsplatte 78 zu halten und die erste Reibungsplatte 78 an einer Drehung in dem "Eingriffszustand" zu hindern. Fachleute auf dem Gebiet der Bremsflächen werden bei Betrachtung der hiesigen Offenbarung schnell viele Mechanismen zur Erzielung einer Bremsbedingung zwischen der ersten und der zweiten Reibungsplatte 78, 80 erkennen, wobei solche Mechanismen bedacht und hier durch Bezugnahme eingebracht werden.

Wie in den Figuren 4A-4B dargestellt ist, erstreckt sich eine elektrische Leitung 106 von einer elektronischen Steuereinheit (ECU) 108 in elektrischer Verbindung mit der elektromechanischen Stütze 10 und insbesondere mit einer elektrischen Karte des Motors 82, die Versorgungsleitungen und Hallsensor-Leitungen und die Spulenanordnung 86 der elektromechanischen Bremsanordnung 38 umfassen kann. Wenn der Motor 32 und die Bremse 38 durch elektrischen Strom von der Leitung 106 gespeist werden, wird die Bremse 38 in den "Nicht-Eingriffszustand" bewegt, und Motorwelle 38 dreht um die Achse A um den Planeten-Getriebesatz 34 und somit die Leitspindel 36 anzutreiben, wodurch die Antriebsmutter 62 und das ausfahrbare Rohr 18 axial zu verschiedenen Positionen angetrieben werden. Beispielsweise kann die Motorwelle 98 die Teleskopeinheit 16 in eine ausgefahrene Position antreiben, um die Hubtür oder die Seitentür zu öffnen. Die Motorwelle 56 kann auch die Teleskopeinheit 16 in eine zusammengezogene Position antreiben, um die Hubtür oder die Tür zu schließen. Die Bremse 38 ist jedoch normalerweise in dem "Eingriffszustand", um eine Bewegung der Motorwelle 56, der Leitspindel 36 und somit der Teleskopeinheit 16 zu verhindern.

Wenn die elektromechanische Bremse 38 in dem "Eingriffszustand" ist, wie in der Figur 4A dargestellt ist, beispielsweise wenn die Tür 28 vollständig geschlossen ist oder in einer offenen Position ist, ist die Spulenanordnung 86 wegen der Abwesenheit von elektrischem Strom, der ihr zugeführt wird, abgeschaltet. Somit wird kein Strom oder keine Energie von der ECO 108 an die Spulenanordnung 86 der Bremse 38 geliefert, und somit spannt die Federkraft, die durch das Federelement 82 ausgeübt wird, die zweite Reibungsplatte 80 in Reibungskontakt mit der ersten Reibungsplatte 78, um die erste Reibungsplatte 78 und somit die Motorwelle 98 an einer Drehung um die Achse A zu hindern. Durch Verhinderung einer Drehung der Motorwelle 98 verhindert die Bremse 38 auch eine Drehbewegung des PlanetenGetriebesatzes 34 und der Leitspindel. Dementsprechend hält die Stütze 10 eine feste Länge, die sich zwischen dem ersten und dem zweiten Ende 22, 26 erstreckt.

Zum Lösen der Bremse 38 und zur Bewegung der Bremse 38 von dem "Eingriffszustand" in den "Nicht-Eingriffszustand", beispielsweise zur Öffnung oder Schließung der Hubtür 28 oder der Seitentür des Fahrzeugs 11, wird ein Signal oder ein Befehl selektiv an die ECU 108 gesandt. Ein Benutzer des Fahrzeugs 11 kann das Senden eines Signals oder eines Befehls an die ECU 108 auslösen, um selektiv die Bremse 38 zu lösen und somit zu erlauben, dass die Hubtür 28 oder die Tür frei in eine neue Position, beispielsweise in eine geöffnete oder eine geschlossene Position bewegt wird. Ein Schlüsselanhänger, Knopf, Sensor oder jede andere Vorrichtung in dem Fahrzeug 11 oder dem Fahrzeug 11 zugeordnet kann verwendet werden, um das Signal an die ECU 108 zu senden. Bei Empfang des Signals liefert die ECU 108 Energie in Form von elektrischem Strom durch die Leitung oder Leitungen 106 an die Spulenanordnung 86 und auch zu dem Motor 32. Beim Einschalten der elektromagnetischen Spulenanordnung 86 über elektrischen Strom, der durch die Drahtwicklung 87 fließt, wird ein Magnetfeld als Ergebnis des Gesetzes von Ampere erzeugt. Das Magnetfeld übt eine Magnetkraft auf die zweite Reibungsplatte 80 aus, die ausreichend stark ist, um die Federkraft des Federelementes 82 zu überwinden, und somit zieht und gleitet die Magnetkraft die Reibungsplatte 80 axial von der ersten Reibungsplatte 78 weg und außer Kontakt. Mit der zweiten Reibungsplatte 80 axial von der ersten Reibungsplatte 78 beabstandet (Figur 4 B), ist die Bremse 38 in den "Nicht-Eingriffszustand" gebracht, wodurch es der ersten Reibungsplatte 78, der Motorwelle 98, dem Planeten-Getriebesatz 34 und der Leitspindel 36 möglich ist, unter einer geeigneten von außen angelegten Kraft zu drehen. Sobald die zweite Reibungsplatte 80 von der ersten Reibungsplatte 78 als solcher gelöst ist, verursacht die Energie, die durch die ECU 108 angefordert wird und an den Motor 32 geliefert wird, dass die Motorwelle 98 und die erste Reibungsplatte 78 um die Achse A drehen. Mit der zweiten Reibungsplatte 78 nicht länger in Kontakt mit der ersten Reibungsplatte 80, können die Motorwelle 98 und die erste Reibungsplatte 78 frei um die Achse A drehen. Die Motorwelle 98 treibt somit den Planeten-Getriebesatz 34 und die Leitspindel 36 an, was dann verursacht, dass die Antriebsmutter 62 und die Teleskopeinheit 16 sich entlang der Leitspindel 36 in die gewünschte Position bewegen. Falls beispielsweise die Hubtür 28 oder die Tür geschlossen ist, kann die Motorwelle 98 die Leitspindel 36 antreiben und damit verursachen, dass die Antriebsmutter 62 und das damit verbundene ausfahrbare Rohr 18 sich entlang der Achse A in eine Position bewegen, in der die Hubtür 28 oder die Tür geöffnet ist. Falls die Hubtür 28 oder die Tür offen ist, kann die Motorwelle 98 die Leitspindel 36 antreiben und damit verursachen, dass die Antriebsmutter 62 und das damit verbundene ausfahrbare Rohr 18 sich axial entlang der Achse A in eine Position bewegen, in der die Hubtür 28 oder die Tür geschlossen ist. Sobald die Hubtür 28 oder die Tür die geöffnete, geschlossene oder eine andere vorgegebene Position erreicht, wird selektiv ein Signal von der ECU 108 gesandt, um die Zufuhr der Energie durch die Leitung 64 an den Motor 32 und die Spulenanordnung 86 zu unterbrechen, wodurch die Spulenanordnung 86 abgeschaltet wird und somit verursacht, dass die Magnetkraft von der Spulenanordnung 86 verschwindet, wodurch verursacht wird, dass sich die zweite Reibungsplatte 80 unter der Spannung des Federelements 82 in den Reibungseingriff mit der ersten Reibungsplatte 78 bewegt. Dementsprechend ist die Bremse 38 wieder in den "Eingriffszustand" gebracht, um eine Drehung der Leitspindel 36 zu verhindern und die Stütze 10 in einer festen Länge und somit die Hubtür 28 oder die Seitentür in der gewünschten Position zu halten.

Die Stütze 10 der vorliegenden Offenbarung kann auch manuell bedient werden. Wenn eine manuelle Bedienung durchgeführt wird, erfasst die ECU 108 eine Bewegung von Rückkopplungssensoren, die entlang der Stütze 10 vorgesehen sind, und löst die elektromechanische Bremse 38 in derselben Weise wie im Strombetrieb, der oben beschrieben wurde. Wenn alle Leistung verloren ist, beispielsweise falls die Fahrzeugbatterie leer ist, ist das Bremsmoment auf eine maximal erlaubte Gleitbedingung beschränkt. Dies ermöglicht es, die Hubtür 28 oder die Tür mit größeren als normalen manuellen Kräften zu öffnen oder zu schließen.

Die oben beschriebenen Ausführungsbeispiele der Erfindung sind als Beispiele der vorliegenden Erfindung gedacht, und Änderungen und Modifikationen können durch Fachleute ohne Abweichung von dem Geist der Erfindung durchgeführt werdet, der letzten Endes durch die breiteste Interpretation von gewährten Ansprüchen, die sich auf diese Offenbarung beziehen, definiert ist.

## Patentansprüche

1. Elektromechanische Stütze zur Bewegung eines Verschlusselementes eines Fahrzeugs zwischen einer geöffneten Position und einer geschlossenen Position, wobei die elektromechanische Stütze aufweist:
eine Antriebseinheit, die funktionsfähig mit einem, dem Verschlusselement und dem Kraftfahrzeugkörper, verbunden ist, wobei die Antriebseinheit ein Gehäuse mit einer Innenfläche aufweist, die einen Hohlraum begrenzt, der sich entlang einer Mittelachse zwischen gegenüberliegenden ersten und zweiten Enden erstreckt, einen Motor, der in dem Hohlraum befestigt ist, eine Leitspindel, die in dem Hohlraum angeordnet ist, ein Planeten-Getriebesatz, der funktionsfähig eine Motorwelle des Motors mit der Leitspindel verbindet, eine elektromechanische Bremsanordnung, die funktionsfähig mit der Motorwelle verbunden ist,
eine Teleskopeinheit, die funktionsfähig mit dem anderen, dem Verschlusselement und dem Kraftfahrzeugkörper, verbunden ist, wobei die Teleskopeinheit ein ausfahrbares Rohr aufweist, das mindestens teilweise in dem Hohlraum durch das zweite Ende des Gehäuses aufgenommen ist und eine Antriebsmutter zur Wandlung einer Drehbewegung der Leitspindel in eine lineare Bewegung der Teleskopeinheit aufweist, um die Teleskopeinheit zwischen einer eingezogenen Position relativ zu dem Gehäuse und einer ausgefahrenen Position relativ zu dem Gehäuse zu bewegen, und wobei die elektromechanische Bremsanordnung selektiv zwischen einem Eingriffszustand und einem Nicht-Eingriffszustand bewegbar ist, wobei die Motorwelle und die Leitspindel an einer Drehung gehindert sind, wenn die elektromechanische Bremsanordnung in dem Eingriffszustand ist, um eine axiale Relativbewegung zwischen der Antriebseinheit und der Teleskopeinheit zu verhindern, wobei eine Drehung der Motorwelle und der Leitspindel ermöglicht ist, wenn die elektromechanische Bremsanordnung in dem Nicht-Eingriffszustand ist, um eine axiale Relativbewegung zwischen der Antriebseinheit und der Teleskopeinheit zu ermöglichen.

2. Elektromechanische Stütze nach Anspruch 1, wobei die elektromechanische Bremsanordnung eine Spulenanordnung aufweist, die funktionsfähig mit einer Quelle elektrischen Stroms verbunden ist, wobei die elektromechanische Bremsanordnung in dem Eingriffszustand verbleibt, wenn die Spulenanordnung durch die Abwesenheit des elektrischen Stroms abgeschaltet ist, und in dem Nicht-Eingriffszustand verbleibt, wenn die Spulenanordnung mit elektrischem Strom gespeist wird.

3. Elektromechanische Stütze nach Anspruch 2, wobei die elektromechanische Bremsanordnung eine erste Reibungsplatte und eine zweite Reibungsplatte aufweist, wobei die erste und die zweite Reibungsplatte in Reibungseingriff miteinander gespannt werden, wenn die Spulenanordnung abgeschaltet ist, wobei die erste und die zweite Reibungsplatte aus dem Reibungseingriff miteinander durch eine Magnetkraft von der Spulenanordnung bewegt werden, wenn die Spulenanordnung gespeist wird.

4. Elektromechanische Stütze nach Anspruch 3, wobei die elektromechanische Bremsanordnung ein Federelement aufweist, wobei das Federelement die erste und die zweite Reibungsplatte in Reibungseingriff miteinander spannt, wenn die Spulenanordnung abgeschaltet ist.

5. Elektromechanische Stütze nach Anspruch 3, wobei die erste Reibungsplatte für eine gemeinsame Drehung mit der Motorwelle befestigt ist.

6. Elektromechanische Stütze nach Anspruch 5, wobei die zweite Reibungsplatte sich unter dem Einfluss der Magnetkraft axial von der ersten Reibungsplatte weg bewegt.

7. Elektromechanische Stütze nach Anspruch 6, wobei sich die zweite Reibungsplatte nicht dreht.

8. Elektromechanische Stütze nach Anspruch 2, wobei die Quelle des elektrischen Stroms durch eine elektronische Steuereinheit über eine elektrische Leitung geliefert wird.

9. Elektromechanische Stütze nach Anspruch 1, wobei der Motor zwischen der elektromechanischen Bremsanordnung und dem Planeten-Getriebesatz angeordnet ist.

10. Elektromechanische Stütze nach Anspruch 1, wobei das ausfahrbare Rohr der Teleskopeinheit ein einzelwandiges Rohr ist.

11. Elektromechanische Stütze nach Anspruch 1, wobei die Teleskopeinheit kein Ausgleichs-Federelement aufweist.

12. Verfahren zur Ermöglichung und Verhinderung einer Bewegung eines Verschlusselements eines Fahrzeugs zwischen einer geöffneten Position und einer geschlossenen Position mit einer elektromechanischen Stütze, wobei die elektromechanische Stütze einer Antriebseinheit aufweist, die funktionsfähig mit einem, dem Verschlusselement und einem Kraftfahrzeugkörper, verbunden ist, wobei die Antriebseinheit einen Motor, eine Leitspindel, einen Planeten-Getriebesatz, der funktionsfähig eine Motorwelle des Motors mit der Leitspindel verbindet, eine elektromechanische Bremsanordnung, die funktionsfähig mit der Motorwelle verbunden ist, und eine Teleskopeinheit, die funktionsfähig mit dem anderen, dem Verschlusselement und dem Kraftfahrzeugkörper, verbunden ist, wobei die Teleskopeinheit ein ausfahrbares Rohr und eine Antriebsmutter zur Wandlung einer Drehbewegung der Leitspindel in eine lineare Bewegung der Teleskopeinheit aufweist, um die Teleskopeinheit zwischen einer eingezogenen Position und einer ausgefahrenen Position zu bewegen, mit:
selektives Anweisen der elektromechanischen Bremsanordnung zur Bewegung in einen Eingriffszustand zur Verhinderung einer Drehung der Motorwelle und der Leitspindel und zur Verhinderung einer axialen Relativbewegung zwischen der Antriebseinheit und der Teleskopeinheit und selektives Anweisen der elektromechanischen Bremsanordnung zu einer Bewegung in einen Nicht-Eingriffszustand zum Erlauben einer Drehung der Motorwelle und der Leitspindel und zum Erlauben einer axialen Relativbewegung zwischen der Antriebseinheit und der Teleskopeinheit.

13. Verfahren nach Anspruch 12 ferner mit Abschalten einer Spulenanordnung der elektromechanischen Bremsanordnung zum Halten der elektromechanischen Bremsanordnung in dem Eingriffszustand und Speisen der Spulenanordnung der elektromechanischen Bremsanordnung mit elektrischem Strom, um die elektromechanische Bremsanordnung in den Eingriffszustand zu bewegen.

14. Verfahren nach Anspruch 13 mit ferner Spannen einer ersten und einer zweiten Reibungsplatte der elektromechanischen Bremsanordnung in Reibungseingriff miteinander, wenn die Spulenanordnung abgeschaltet ist, und Bewegen der ersten und der zweiten Reibungsplatte aus dem Reibungseingriff miteinander durch eine Magnetkraft von der Spulenanordnung, wenn die Spulenanordnung gespeist wird.

15. Verfahren nach Anspruch 14 mit ferner Spannen der ersten und der zweiten Reibungsplatte der elektromechanischen Bremsanordnung in Reibungseingriff miteinander mit einem Federelement, wenn die Spulenanordnung abgeschaltet ist.

16. Verfahren nach Anspruch 14 mit ferner Befestigung der ersten Reibungsplatte an der Motorwelle für eine gemeinsame Drehung damit.

17. Verfahren nach Anspruch 16 mit ferner Bewegen der zweiten Reibungsplatte axial weg von der ersten Reibungsplatte unter dem Einfluss der Magnetkraft bei Speisung der Spulenanordnung.

18. Verfahren nach Anspruch 12 mit ferner Anordnen des Motors zwischen der elektromechanischen Bremsanordnung und dem Planeten-Getriebesatz.

19. Verfahren nach Anspruch 12 mit ferner Vorsehen des ausfahrbaren Rohres der Teleskopeinheit als ein einzelnes Rohr.

20. Verfahren nach Anspruch 19 mit ferner Vorsehen der Teleskopeinheit ohne ein Ausgleichs-Federelement.
